# EUROPEAN PATENT APPLICATION

(11) **EP 4 209 847 A1**
(43) Date of publication of application: **12.07.2023**
(21) Application number: 23150842.5
(22) Date of filing: 10.01.2023
(51) Int. Cl.: G05B 23/02

(54) **AUTOMATED CONTROL DEVICE FOR INDUSTRIAL INSTALLATIONS, IN PARTICULAR FOR PUMPING INSTALLATIONS OR ENERGY GENERATORS, CONTROL SYSTEM IMPLEMENTED BY SUCH DEVICE AND RELATED CONTROL METHOD**

(30) Priority: 10.01.2022 IT 202200000227
(71) Applicant: Paladini, Paolo Francesco Rocco, 55100 Lucca (IT)
(72) Inventor: Paladini, Paolo Francesco Rocco, 55100 Lucca (IT)
(74) Representative: Fabbriciani, Simone

(57) **Abstract**

Described is an automated control device (1) for industrial plants, in particular for pumping plants or energy generators.

Moreover, a system actuated by the control device (1) and the relative control method are also described and claimed.

The control device (1) according to the invention comprises, on a box-shaped body (2), which can be associated with a part of the industrial plant to be checked, a control unit (3) designed to be connected to an electronic circuit for detecting any variation in a predetermined rest state; means (4) for supplying the control unit (3); means (5) for storing the predetermined rest state and for recording said variation; connecting means (6) between the control unit (3) and the electronic circuit; and means (7, 8) for sending the indication of the variation towards the outside.

## Description

This invention relates to an automated control device for industrial plants, in particular for pumping plants or energy generators, to a control system actuated by the device and to a relative control method.

Industrial plants require strict maintenance and extremely rigid control systems in order to ensure perfect operation and compliance with safety regulations.

According to the prior art, for example in the case of maintenance of a pumping unit, a weekly check of the system is required which requires approximately twenty minutes and which consists in a control of the correct movement of the levers, which are therefore manoeuvred to control the correct operation of the system.

Once the user or company carrying out the checks has made sure that everything is normal, that check must be recorded in a paper or electronic register to have legal value.

Of course, the mere fact that a check has been protocolled does not mean that it is carried out correctly and there may even be cases of false recordings: scams that allow audit companies to save time and money, allowing industrial plant ownership to obtain unfair compensation from insurance companies called to compensate for damage caused by plant malfunctions.

The purpose of the invention is to overcome the above-mentioned drawbacks in such a way as to ensure that the maintenance of the plant has actually occurred and in the appropriate manner and timescales.

An aim of the automated control device for industrial plants, in particular for pumping plants or energy generators, according to this patent application, is to ascertain the correctness of the check described above, in such a way as to guarantee the safety of the plant.

In the context of the above-mentioned purpose, an aim of the invention is to provide an automated control device and system for industrial plants which provides a legally valid storage, so as to eliminate any problems relating to compensation by insurance companies.

Another aim of the invention is to allow an automated management of the device and the control system, in such a way as to make it economically competitive.

This purpose, as well as these and other aims, which are described in more detail below, are achieved by an automated control device for industrial plants, in particular for pumping plants or energy generators, according to the invention, comprising the technical features described in one or more of the appended claims. The dependent claims correspond to possible different embodiments of the invention.

In particular, according to a first aspect, the invention relates to an automated control device for industrial plants, in particular for pumping plants or energy generators, comprising, on a box-shaped body which can be associated with a part of the industrial plant to be controlled:
a control unit designed to be connected to an electronic circuit for detecting any variation in a predetermined rest state;
power supply means for the control unit;
means for storing the predetermined rest state and for recording the above-mentioned variation;
connecting means between the control unit and the electronic circuit; means for sending the variation signal towards the outside.

Advantageously, the sending means intervention means on parts of the industrial plant, in such a way as to restore said predetermined rest state or to bring the industrial plant to a predetermined standard operating state, recorded in advance in the storage means.

Another aspect of the invention relates to an automated control system for industrial plants, in particular for pumping plants or energy generators, which comprises a control unit designed to be connected to an electronic circuit for detecting any variation in a predetermined rest state, protocolled in storage means. The electronic circuit is designed to record this variation, in the storage means. There are also means for signalling the variation which are interconnected between the control unit and the remote peripherals. In addition, there are also alarm means, connected to the control unit, designed to alert an operator who controls a console of the control unit.

Advantageously, the control unit allows the actuation of intervention means on parts of the industrial plant in such a way that, following the detection of the variation of the rest state by the electronic circuit, the predetermined rest state is re-established.

Similarly, the control unit preferably allows the intervention means to be actuated in such a way as to bring the industrial plant to a predetermined standard operating state, previously recorded in the storage means.

A final aspect of the scope of protection of the invention relates to a control method for industrial plants, in particular for pumping plants or energy generators, which comprises the steps consisting of:
- recording a rest state in storage means connected to a control unit,
- checking any variation of the predetermined rest state by means of an electronic detection circuit,
- recording this variation in the storage means,
- sending a signal of the variation to the remote peripherals, using signalling means, and
- sending an alarm for an operator who controls a console, or any control centre, of the control unit itself, using alarm means.

Advantageously, the method comprises recording at least one standard operating state in storage means connected to the control unit.

Further features and advantages of the invention are more apparent in the detailed description below, with reference to a preferred, non-limiting embodiment of the automated control system for industrial plants, in particular for pumping plants or energy generators, illustrated by way of example and without limiting the scope of the invention, with the aid of the accompanying drawings, in which:
Figure 1 shows an embodiment of the device 1;
Figure 2 is a block diagram of the operation of the automated control system for industrial plants.

The above-mentioned drawings show a preferred embodiment of an automated control device for industrial plants, in particular for pumping plants or energy generators, according to the invention, which is identified in its entirety with the numeral 1 and which comprises, on a box-shaped body 2, preferably comprising a metal box which guarantees the screening of radio-electric interference, which can be associated with a part of the industrial plant to be checked, a control unit 3, that is, a programmable electronic card 3, designed to be connected to an electronic circuit for detecting any variation in a predetermined rest state, using sensors which are able to detect certain physical/chemical quantities which vary depending on the use of the plant on which the device 1 is mounted. There are also means for powering the control unit 3, such as the mains voltage 4 of and/or a rechargeable battery. In any case, the power supply means supply the electronic circuitry but also, preferably, keep charged a sealed standby battery which, in the absence of a mains supply, guarantees the functionality of the device for at least 24 hours.

The device 1 has means for storing the predetermined rest state and for recording the variation of the rest state, according to the preferred embodiment, the storage means consist of a digital internal storage means 5, but - obviously - may also comprise a cloud or a remote archive connected to the control unit 3, for example an NAS ("Network Attached Storage").

Moreover, connecting means provide communication between the control unit 3 and the electronic circuit. According to the embodiment described, detection sensors are used which use communication technologies both wired and via radio, or, alternatively, double band frequency magnetic contacts, preferably with one-way encrypted communication protocol.

In addition, the device 1 is equipped with means for sending the signalling of the change of state towards the outside. These means comprise a connection to the Internet and/or a voice-data call (GSM).

The Applicant has perceived that the device 1, by means of the electronic circuit for detecting events, continuously controls the rest state of the system and monitors any variation of a predetermined and recorded state. That is to say, the system takes over the plant to be controlled in the perfect operating state so that any variation to this rest state, such as the setting in motion of an apparatus or the movement of an accessory, is considered as an anomaly to be recorded.

The device 1 according to the preceding claim, wherein said sending means (7, 8) control intervention means on parts of the industrial plant, in such a way as to restore said predetermined rest state.

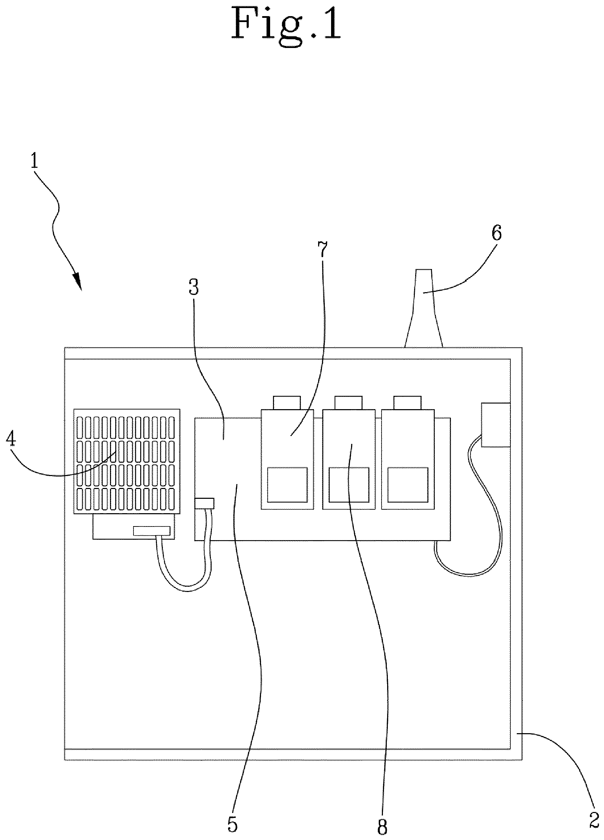

For this reason, when an event or disturbance to the rest state is actuated, the device 1 stores what has happened, allocating it in its internal storage means 5 and, simultaneously, sends various signals to the external and remote peripherals prepared, both through the Internet and through the GSM network (Figure 1).

The Applicant has provided that the messages, already stored in the device, communicate any variation in the status of the plant to be controlled and are also sent in real time to a remote console, for example a dedicated data processor, which, as well as storing the event, allows the operator who controls the console to intervene in the most suitable manner.

Preferably, the remote supervision console is powered through a suitably sized inverter.

When necessary, certain particular messages, and at the specific request of the user, may be sent to the same user or to a suitably indicated person.

The Applicant has provided intervention means on parts of the industrial plant which, controlled by the control unit 3, following the detection of the variation by the sensors of the electronic circuit, operate on parts of the plant to re-establish the predetermined rest state.

If the device and system are applied to a pumping system, for example, the intervention means interact on, opening or closing them depending on requirements to re-establish the predetermined rest state.

Moreover, the device 1 allows a standard operating state to be recorded, on the storage means, in such a way as to bring the industrial plant to the predetermined standard state.

Also in this case, in a similar manner to what is described above, the intervention means interact on parts of the industrial plant controlled by the control unit 3 for moving the plant in one of the predetermined and previously stored standard operating states.

The automated control system for industrial plants, in particular for pumping plants or energy generators, is a "son" of the device 1 just described and comprises:
a control unit 3 which may be connected to an electronic circuit for detecting any variation in a predetermined rest state, previously protocolled in suitable storage means. The electronic circuit is designed to record, in these storage means, the above-mentioned change in state.
Similarly to what was seen for the device 1, the control system according to the invention also comprises means for signalling the variation from the predetermined rest state, interconnected between the control unit 3 and
the remote peripherals set up.

There are also alarm means connected to the control unit 3 and designed to alert the operator who controls the console of the control unit, so that the operator can, if necessary, intervene effectively on the plant.

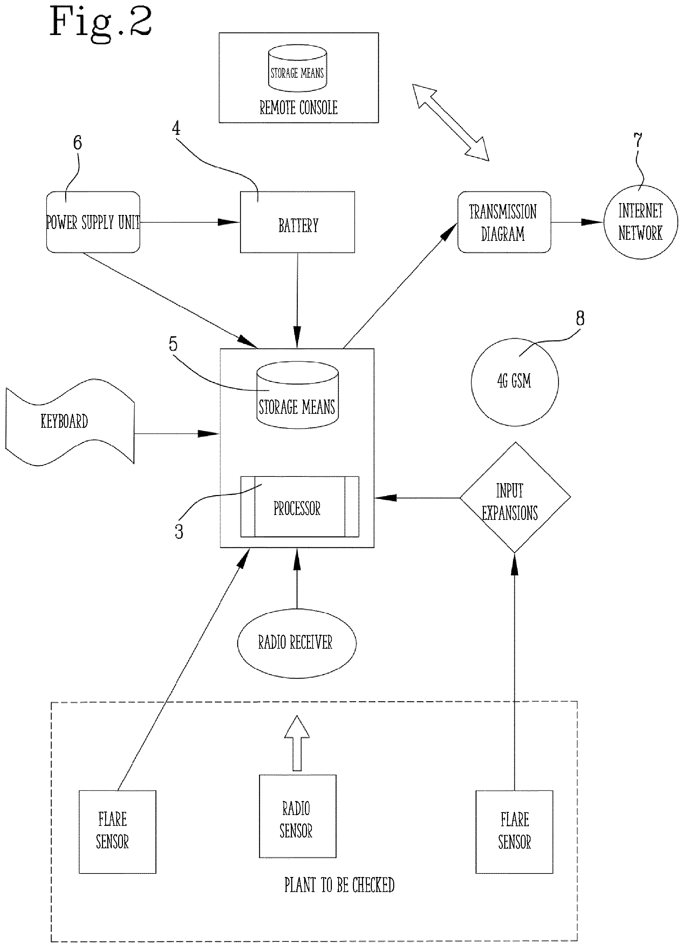

With reference to Figure 2, the system is preferably provided with the control unit 3 already described, which is designed to activate the intervention means acting on parts of the industrial plant in such a way that, after detecting the above-mentioned variation by the electronic circuit, comprising a series of sensors for checking the physical/chemical properties of the industrial plant (temperature, pressure, fuel level, state of the valves, operation of switches...), the predetermined rest state can be re-established.

In addition, the intervention means allow the actuation of the appropriate parts of the plant in such a way as to bring the industrial plant to a predetermined standard operating state, previously recorded in the internal storage means 5.

According to a variant embodiment, relative to a pumping system, the intervention means are designed to interact on the motors of the valves of the pumping units, in particular acting on pistons for opening and closing the valves.

The device 1 and the control system put into practice a control method which comprises the following steps.

Firstly, a rest state is recorded in the internal storage means 5, connected to the control unit 3.

Preferably, one, or more, standardised operating states can be recorded. Any variation in the predetermined rest state is then checked by means of an electronic detection circuit, that is to say, a series of suitable sensors. The control is redundant and is therefore performed continuously by the device and by the system.

Each variation detected is treated as an anomaly and is therefore recorded (with type, date and time) in the internal storage means 5. Signals are immediately sent to remote peripherals notifying the above-mentioned variation, by means of signalling means, using the Internet, the GSM network or other equivalent systems.

Simultaneously, the information on the variation is sent to the operator who controls the console of the control unit 3, using alarm means, also in this case the Internet, GSM and equivalent technologies. Advantageously, the device and the system can act automatically, interacting on the parts of the plant to return to the rest state or to bring it to one of the standard states recorded, ensuring that the control unit 3 sends a command in that sense to units provided (mechanical linkages, pistons, electrical signals, etc.).

From the above description it may be seen how the invention achieves the preset purpose and aims and in particular it should be noted that an automated control system is made for industrial plants, in particular for pumping plants or energy generators, which guarantees the effective maintenance of the plant in the appropriate manner and timing.

In particular, having prepared a redundant control system prevents any shortcomings or faults, malfunctions, failures to start up etc. which may normally occur, and it also restores the apparatus to the original state, which is necessary if - for example following a control performed by the owner of the industrial plant - some manoeuvres essential to guarantee the full efficiency of the plant being monitored are omitted.

Another advantage of the automated control device and system for industrial plants according to this patent application is that it has ascertained the correctness of the monitoring described above, in such a way as to guarantee the safety of the plant at least until a certain date. Another advantage of the invention is that it provides an automated control device and system for industrial plants which constitutes a clear and legally expendable test, in such a way as to eliminate any problems relating to compensation by insurance companies.

Moreover, this type of monitoring automatically leads to the certification by a third party of the activities which the owner of the industrial plant must perform on its own in accordance with national and international regulations (UNI).

Another advantage of the invention is to allow an automated management of the device and the control system, in such a way as to make it economically competitive.

The invention can be modified and adapted in several ways without thereby departing from the scope of the inventive concept.

Moreover, all the details of the invention may be substituted by other technically equivalent elements.

In practice, the materials used, as well as the dimensions, may be of any type, depending on requirements, provided that they are consistent with their production purposes.

## Claims

1. Described is an automated control device (1) for industrial plants, in particular for pumping plants or energy generators, comprising, on a box-shaped body (2) which can be associated with a part of the industrial plant to be controlled:
a control unit (3) designed to be connected to an electronic circuit for detecting any variation in a predetermined rest state;
means (4) for powering said control unit (3);
means (5) for storing said predetermined rest state and for recording said variation;
connecting means (6) between said control unit and said electronic circuit;
means (7, 8) for sending signals of said variation towards the outside.

2. The device (1) according to the preceding claim, wherein said sending means (7, 8) control intervention means on parts of the industrial plant, in such a way as to restore said predetermined rest state.

3. The device (1) according to claim 1 or 2, comprising the step of recording, on said storage means (5), in such a way as to bring the industrial plant to a predetermined standard operating state.

4. The device (1) according to the preceding claim, wherein said sending means (7, 8) control intervention means on parts of the industrial plant, in such a way as to restore said predetermined rest state.

5. An automated control system for industrial plants, in particular for pumping plants or energy generators, comprising:
a control unit (3) designed to be connected to an electronic circuit for detecting any variation in a predetermined rest state, protocolled in storage means (5);
said electronic circuit being designed to record said variation in said storage means (5);
means for signalling said variation, interconnected between said control unit (3) and remote peripherals;
alarm means connected to said control unit (3) and designed to alert an operator who controls a console of said control unit (3).

6. The system according to the preceding claim, wherein said control unit (3) actuates intervention means on parts of the industrial plant in such a way that, following the detection of said variation by said electronic circuit, the predetermined rest state is re-established.

7. The system according to claim 5 or 6, wherein said control unit (3) actuates intervention means on parts of the industrial plant in such a way as to bring the industrial plant to a predetermined standard operating state, recorded on said storage means (5).

8. The system according to the preceding claim, wherein said intervention means are designed to interact on motor means of valves, preferably said intervention means comprising pistons for opening and closing valves.

9. The system according to any one of the preceding claims, wherein said electronic circuit comprises a series of sensors for checking the physical/chemical properties of the industrial plant.

10. A control method for industrial plants, in particular for pumping plants or energy generators, which comprises the steps consisting of:
- recording a state of rest in storage means (5) connected to a control unit (3),
- checking any variation of said predetermined rest state by means of an electronic detection circuit,
- recording said variation in said storage means (5),
- sending a signal of said variation to remote peripherals, using signalling means, and
- sending an alarm for an operator who controls a console of said control unit (3), using alarm means.

11. The method according to the preceding claim, wherein the step of checking for any variation of the predetermined rest state is performed continuously by said electronic detection circuit.

12. The method according to claim 10 or 11, comprising the step of recording at least one standard operating state in storage means (5) connected to said control unit (3).
